# EUROPEAN PATENT SPECIFICATION

(11) **EP 1 158 387 B1**
(45) Date of publication and mention of the grant of the patent: **30.05.2007**
(21) Application number: 01301731.4
(22) Date of filing: 26.02.2001
(51) Int. Cl.: G06Q 10/00

(54) **System and method for updating commodity information**
System und Verfahren zur Aktualisierung von Warendaten
Système et méthode pour la mise à jour de données de produits

(30) Priority: 22.05.2000 KR 2000027500
(43) Date of publication of application: 28.11.2001
(73) Proprietor: SAMSUNG ELECTRONICS CO., LTD., Suwon-City, Kyungki-do (KR)
(72) Inventor: Ko, Jung-wan, Paldal-gu, Suwon-si, Gyeonggi-do 442-400 (KR); Kim, Byung-jun, Suwon-city, Kyungki-do (KR)
(74) Representative: Benson, Christopher

(56) References cited:
- EP-A- 0 802 527
- EP-A- 0 817 181
- US-A- 5 090 007
- US-A- 5 241 531
- US-A- 5 644 782
- US-A- 5 694 546
- US-A- 5 924 096
- US-A- 6 032 130

## Description

The present invention relates to a system and method, and more particularly, to an online purchasing system and method for updating commodity information.

Among commodities which are currently being sold, many of them need to be continuously updated in the catalogs for introducing the commodities. Consumers purchase commodities by referring to the catalogs, regardless of whether or not they have been updated.

There are largely two systems which have conventionally been used to allow consumers to purchase products; one is an offline purchasing system and the other is an online purchasing system.

First, according to the offline purchasing system, a supplier presents a commodity catalog, usually in the form of a book-like paper catalog, to consumers, and the consumers select items to be purchased by referring to the catalog. Then, the consumers visit an actual store where commodities are sold to purchase their desired commodity items, pay for the purchased items and then carry the purchased items home. Several problems with this method are that necessary commodities may not be available from the consumers' visited store, and commodity information may not be offered opportunely. Also, pricing updates may not be done properly. Further, the consumer must involve almost all purchase processes in person.

According to the online purchasing system, consumers access the Internet, browse shopping malls to retrieve their desired commodities and then order their selected commodities. The consumers make a payment associated with commodity ordering by wire transfer or credit card, the consumers are authenticated and the merchant checks the credit card for approval. Then, the consumers' ordered items are transported to the consumers.

In this case, consumers must access the network to sort through shopping malls or a large number of products to order the products they want to purchase, which is very cumbersome. Another problem with this method is that it is not easy to authenticate the consumer's identity and consumer information may be divulged in an unsecured status. Also, consumer information may be intentionally offered to be abused by unreliable shopping malls.

US 5,090,007, US 5,241,531 & EP-A-0,817,181 disclose optical recording media having a read-only area and a writable area.

US 5,694,596 discloses an electronic information transport component which can incorporated in a wide range of electronic information products to automate the mass distribution of updates, such as current issues, from a remote server.

US 6,032,130 discloses an electronic system that provides multimedia product in representations in real-time, by combining locally-stored data and data received from a remote server. Large volumes of data, representing product information such as motion images and sound are stored locally on the system's data storing unit for fast data access. Small volumes of product time-variable data are received over a network from a remote server. The purchasing system combines the local and received data in order to provide both real-time and up-to-date product information to a customer.

EP-A-0,802,527 discloses an optical disk having an auxiliary data recording area, where different IDs for individual disks, and/or cipher keys and/or decoding keys for ciphers are recorded in advance in a factory.

With a view to solve or reduce the above problems, it is an aim of embodiments of the present invention to provide a medium for supplying consumers with updated commodity information at any time.

It is another aim of embodiments of the present invention to provide a commodity information updating method for supplying consumers with updated commodity information at any time.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 is a block diagram of a system for implementing a commodity information updating method according to an embodiment of the present invention; and
Figure 2 is a flow diagram illustrating the operation of a method for updating commodity information according to an embodiment of the present invention.

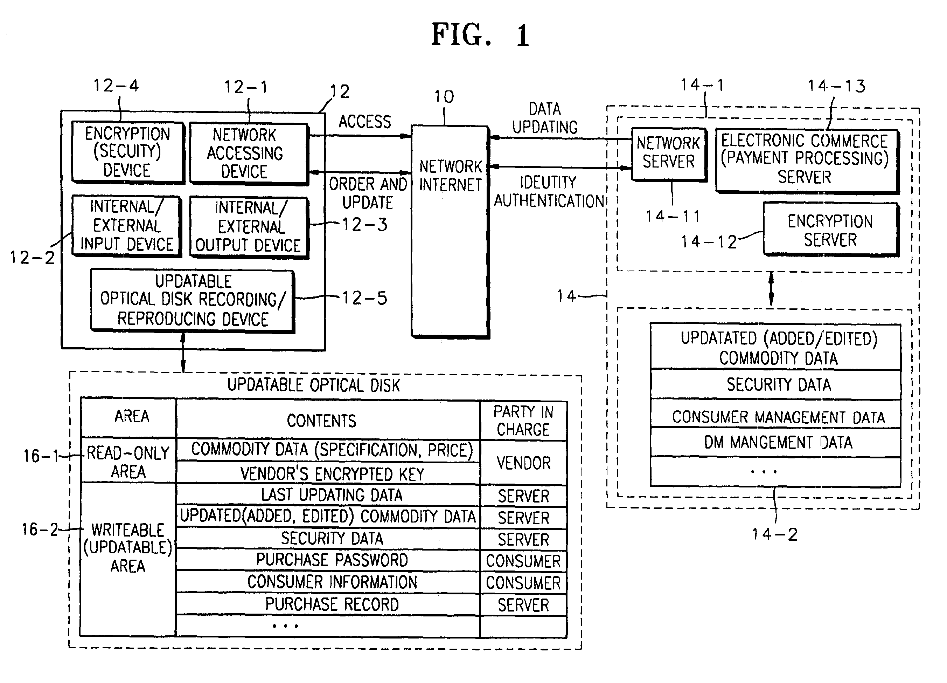

Figure 1 is a block diagram of an embodiment of a system for implementing a commodity information updating method according to the present invention.

The system shown in Figure 1 includes a computer network 10, a user's terminal 12, linked to the computer network 10, for receiving updated/edited data, a server 14 for transmitting the updated/edited data to the user's terminal 12, and an updatable optical disk 16.

The user's terminal 12 includes a network interfacing device 12-1 which allows accessing the computer network 10, an internal/external input device 12-2 for receiving inputs by a user, an internal/external output device 12-3 for outputting necessary information to an internal/external display device (not shown), an encryption (security) device 12-4 for identity authentication and cryptographic communication, and an updatable optical disk recording/reproduction device 12-5 for reading/writing from/on the optical disk 16.

The server 14 includes a network server 14-1 accessing the computer network 10, an electronic commerce (payment processing) server 14-11, an encryption server 14-12, and a server database 14-2 in which data and various kinds of information by which the optical disk 16 can be updated/edited.

The optical disk 16 includes a non-writeable, read-only area 16-1 and a writeable (updatable or rewriteable) area 16-2 where a write operation can be done by a user.

The operation of the system shown in Figure 1 will now be described in detail.

The computer network 10, for transmitting/receiving data to/from computers, includes the Ethernet, the Local Area Network (LAN) or the WAN (Wide Area Network), preferably the Internet.

The user's terminal 12 is implemented in the form of a desk top computer or a personal computer (PC). The user's terminal 12 allows accessing the computer network 10, and the network interfacing device 12-1 transmits and/or receives data through the computer network 10. The internal/external input device 12-2, including a key board, a remote controller, a mouse and so on, receives instruction or data supplied by the user to the user's terminal 12. The internal/external output device 12-3, including an internal or external LCD or TV, a printer and so one, provides data requested by the user in the form of a hard copy, a file or graphics. The encryption device 12-4 authenticates the user's identity and executes cryptographic communication, together with the encryption server 14-12 of the server 14. The updatable optical disk recording/reproducing device 12-5 records or reproduces data on or from the updatable/editable optical disk 16.

The updatable optical disk recording/reproducing device 12-5 reproduces data from the read-only area 16-1 or the writeable (updatable) area 16-2 of the optical disk 16, or records the updated/edited data received through the network interfacing device 12-1 on the writeable area16-2 of the optical disk 16. In the read-only area 16-1 of the optical disk 16, non-erasable, read-only data is written, like a compact disk read-only memory (CD-ROM) or a digital versatile disk random access memory (DVD-RAM). In the writeable area 16-2, data is erasable or writeable, like a rewriteable compact disks (CD-RW) or a rewriteable digital versatile disk (DVD-RW).

The optical disk 16 is provided to the user by a contents vendor for providing contents such as Karaoke, encyclopedia or navigation. The commodity catalog data of the time of manufacture of the optical disk 16 and a commodity vendor encrypted key are written in the read-only area 16-1. The last updating date data of the optical disk 16, updated commodity catalog data, purchase file data, security data or consumer's private data are written in the writeable area 16-2. The writeable area 16-2 is a rewriteable area by the server 14 and consumers.
The server 14 is a server known in the computer-related field and basically functions as a web server for transmitting and/or receiving data over the Internet. The server 14 includes a hardware and a software for communication with the user's terminal 12.

The server 14 allows the user's terminal accessed through the computer network 10. The network server 14-1 transmits the updated/edited data, the electronic commerce server 14-13 supports electronic commerce, and the encryption server 14-12 processes user authentication together with the encryption device 12-4 of the user's terminal 12. The server database 14-2 contains updatable/editable newest data, security data, consumer information or purchase information and provides the same to the user's terminal 12 accessed through the computer network 10.

The updatable optical disk 16 having a initial database and an encrypted key (encrypted key for server) to be used by the server 14, is distributed to the user.

The user mounts the optical disk 16 on the user's terminal 12 for use, as shown in Figure 1. The user's terminal 12 can be accessed through the computer network 10, which allows accessing the server 14 to receive the updated/edited data to be written on the optical disk 16.

The database distributed after user registration can be used by the user. Prior to use, the last updating date of the commodity catalog data is received from the server 14 and compared with the last updating date written on the writeable area 16-2 of the optical disk 16. If both dates are different, that is, if updated/edited data exists, the necessary commodity catalog data to be updated/edited is received from the server 14 and automatically written on the writeable area 16-2 of the optical disk 16. By doing so, newly added commodities, changed price, commodity inventory, commodity function or status can be updated.

Therefore, the user can retrieve the latest commodity catalog information at any time through the optical disk 16 when accessing the network 10, and can purchase the desired commodity according to the commodity catalog information. During user's retrieval, the user is offered with the updated commodity information and the non-updated commodity information, distinctively marked with different colours or blocks, so that the user can conveniently retrieve the commodity information.

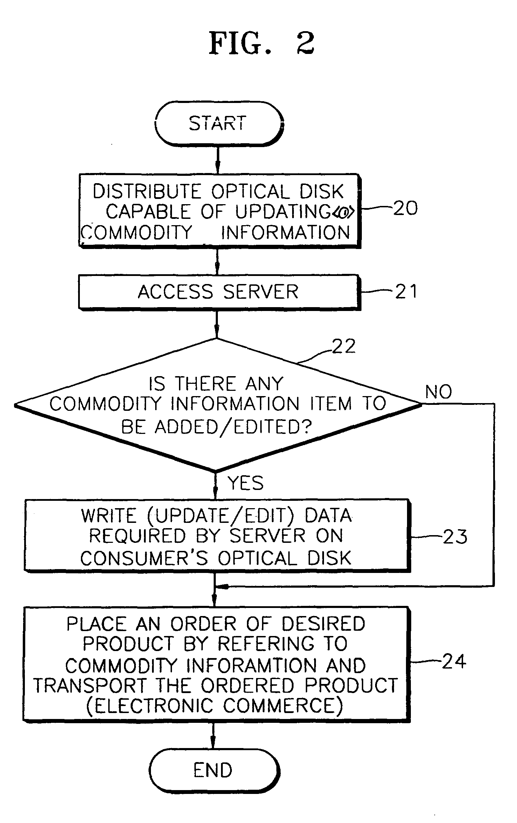

Figure 2 is a flow diagram showing the operation of an embodiment of a method for updating an optical disk for electronic commerce according to the present invention.

The method shown in Figure 2 includes the steps of distributing an updatable optical disk to consumers (step 20), accessing server (step 21), determining whether there is commodity information item to be updated/edited (step 22), recording data required by the server on the optical disk (step 23) and ordering a desired commodity by referring to the commodity information and transporting the ordered commodity (step 24).

Next, the flow diagram shown in Figure 2 will be described in detail.

First, a commodity vendor distributes a catalog having information of commodities sold by the vendor written on the read-only area 16-1 of the optical disk 16 (step 20).
Here, no separate registration nor administration are necessary. The vendor encrypted key may be additionally used or not. The encrypted key is used for strengthening security during electronic commerce.

The user (consumer) accesses the vendor's server 14 through the computer network 10 (step 21). If the user accesses the vendor's electronic commerce server 14-2 to make a vendee registration. Then, the electronic commerce server 14-13 adds user information to the server database 14-2 to make the user enter individual password to be used in purchase, and then records the input password on the server database 14-2. Then, an encrypted key for authorization of the individual password is written on the optical disk 16. By doing so, divulgation of the password can be prevented, and offline purchase as well as online purchase are also allowed, including password verification. Further, the encrypted password can be used for vendee's identity authentication. Also, consumer's personal data is received to be utilized as materials for analysis of propensity to purchase or direct-mail (DM).

If accessing the server 14 is completed, it is determined whether there is a commodity information item to be updated/edited (step 22).

If there is a commodity information item to be updated/edited, the commodity catalog information required by the server database 14-2 is written (updated/edited) on the user's optical disk (step 23).

In detail, if accessing the server 14 is completed, the updated date of the optical disk 16 is read. Then, if there is a commodity information item to be updated/edited, the commodity catalog information required by the server database 14-2 is transmitted to be written on the writeable area 16-2 of the user's optical disk 16 to then be driven in combination with existing catalog information. The commodity catalog information contains not only three-dimensional information, rather than two-dimensional information, but also function or service information. This work can performed faster in the case where the user temporarily stops the operation being currently run. Thus, new commodities, changed price, commodity inventory, commodity function or status can be updated.

The commodity catalog information written on the optical disk 16 is retrieved and then a desired product is ordered for distribution (step 24). During user's retrieval, the user is offered with the updated commodity information and the non-updated commodity information, distinctively marked with different colours or blocks, so that the user can conveniently retrieve the commodity information.

If the user places an order after retrieval of commodity catalog information, basic information such as payment instrument or delivery place is input to the server, and then the server requests entry of a credit card number or a number of other payment instrument. Then, a secured transmission route is acquired through the encryption server 14-12 to be transmitted. In this stage, user's identity such as password is verified. If the identity verification and payment confirmation are done, the vendor proceeds the next step for transportation of the ordered product and transmit the related purchase information to the consumer. The transmitted information is written on the optical disk 16 as the sales evidence, which will be necessary for refund or exchange in the event of delivery failure or commodity damage.

As described above, according to the present invention, consumers can easily accessible to latest commodity information at any time, and purchasing using the latest commodity information is secured. Also, the purchasing process is made fast and the purchase record is automatically filed in consumer side, creating the effect of guaranteeing refund or exchange in the future.

Also, an increase in the sales achievement can be expected for suppliers owing to an easy, secured purchasing system, the purchase record is filed in a server, and identity verification can be done easily and accurately, thereby reducing a commodity loss. Further, labor waste can be reduced in the course of marketing. Since commodity catalog information is distributed online, labor and financial waste can be reduced.

## Claims

1. An online purchasing system, comprising:
a user terminal (12) arranged to communicate with a commodity information server (14-1) over a computer network (10);
**characterised in that**:
the user terminal (12) is arranged to read commodity information from a read-only area (16-1) of an optical data storage medium (16) and to read a last updating date of the optical data storage medium (16) from a rewritable area (16-2) of the optical data storage medium (16);
the user terminal (12) is arranged to check whether or not there is commodity information to be updated by comparing a last updating date of commodity information received from the commodity information server (14-1) with a last updating date written on the rewriteable area (16-2) of the medium (16);
if the compared updating dates are different, the user terminal is arranged to obtain updated commodity information from the commodity information server (14-1) via the computer network (10);
the user terminal (12) is arranged to write the updated commodity information received from the commodity information server (14-1) to the rewriteable area (16-2) of the optical data storage medium (16); and
the user terminal (12) is arranged to combine the commodity information in the read-only area (16-1) and the rewritable area (16-2) of the optical storage-medium (16) for display to a user.

2. The online purchasing system of claim 1, wherein only necessary commodity information to be updated/edited is received from the commodity information server (14-1).

3. The online purchasing system of claim 1 or 2, wherein:
the user terminal (12) is arranged to transmit user information including a user password to the commodity information server (14-1) via the computer network (10), the commodity information server (14-1) is arranged to add the received user information to a user database (14-2) and the user terminal is arranged to write an encrypted key for authorization of the user password to the rewriteable area (16-2) of the medium (16).

4. The online purchasing system according to any preceding claim, wherein the read-only area (16-1) of the optical data storage medium (16) is divided into an area in which predetermined commodity information of the manufacture time of the medium (16) is written, and an area in which a vendor's encrypted key is written.

5. The online purchasing system of claim 1, 2 or 3, wherein the user terminal (12) comprises an encryption device (12-4) for performing cryptographic communication with an encryption server (14-12) using the vendor's encrypted key.

6. The online purchasing system according to any preceding claim, wherein the writeable area (16-2) of the optical data storage medium (16) is divided into an area in which commodity information updating data is written, an area in which updated commodity information is written, an area in which commodity purchase information is written, and an area for user's private information.

7. The online purchasing system according to any preceding claim, wherein the writeable area (16-2) is an area in which predetermined information is repeatedly written by the commodity information server (14-1) and the user.

8. A method for updating commodity information, the method comprising the steps of:
an apparatus (12) accessing a commodity information server (14-1) through a computer network (10);
**characterised by**:
(a) if an optical data storage medium (16) is mounted on the apparatus (12), reading commodity information written in a read-only area (16-1) of the optical data storage medium (16) and a last updating date of the optical data storage medium (16) from a rewritable area (16-2) of the optical data storage medium (16);
(b) checking whether or not there is commodity information to be updated in the commodity information written on the medium by comparing a last updating date of commodity information received from the commodity information server (14-1) with the last updating date written on the rewriteable area (16-2) of the medium (16);
(c) if the compared last updating dates are different, the apparatus (12) obtaining updated commodity information from the commodity information server (14-1) via the computer network (10);
(d) the apparatus (12) writing the transmitted commodity information on the rewriteable area (16-2) of the medium (16); and
(e) the apparatus (12) combining the commodity information in the read-only area (16-1) and the rewritable area (16-2) of the optical data storage medium (16) for display to a user.

9. The method of claim 8, wherein only necessary commodity information to be updated/edited is transmitted from the commodity information server (14-1) to the apparatus (12).

10. The method of claim 8 or 9, comprising the apparatus (12) using a vendor's encrypted key written in a read-only area of the medium (16) to perform cryptographic communication with the commodity information server (14-1) .

11. The method of claim 8, 9 or 10, comprising the apparatus (12) transmitting user information including a user password to the commodity information server (14-1);
the commodity information server (14-1) adding the received user information to a user database (14-2); and
the apparatus (12) writing an encrypted key for authorization of the user password to the rewriteable area (16-2) of the medium (16).

12. The method according to any of claims 8 to 11, wherein during user's retrieval, the commodity information is distinctively marked so that an updated portion and a non-updated portion are distinguished from each other.

13. The method according claim 12, wherein the updated portion and the non-updated portion are marked with different colours.

14. The method according to any of claims 8 to 13, further comprising the step of (f) recording user's purchase order based on the retrieval of the commodity information on the medium.

## Patentansprüche

1. Online-Einkaufssystem, das aufweist:
ein Benutzer-Endgerät (12), das so eingerichtet ist, um mit einem Waren-Informations-Server (14-1) über ein Computemetzwerk (10) zu kommunizieren;
**dadurch gekennzeichnet, dass**
das Benutzer-Endgerät (12) so eingerichtet ist, um Waren-Informationen von einem Read-Only-Bereich (16-1) eines optischen Datenspeichermediums (16) zu lesen und um ein letztes Aktualisierungsdatum des optischen Datenspeichermediums (16) von einem wieder beschreibbaren Bereich (16-2) des optischen Datenspeichermediums (16) zu lesen;
das Benutzer-Endgerät (12) so eingerichtet ist, um zu prüfen, ob Waren-Informationen vorhanden sind oder nicht, die durch Vergleichen eines letzten Aktualisierungs-Datums über die Waren-Informationen, die von dem Waren-Informations-Server (14-1) empfangen sind, mit einem letzten Aktualisierungs-Datum, das auf dem wieder beschreibbaren Bereich (16-2) des Mediums (16) geschrieben ist, zu aktualisieren sind;
wenn die verglichenen Aktualisierungs-Datum-Angaben unterschiedlich sind, das Benutzer-Endgerät so eingerichtet ist, um aktualisierte Waren-Informationen von dem Waren-Informations-Server (14-1) über das Computer-Netzwerk (10) zu erhalten;
das Benutzer-Endgerät (12) so eingerichtet ist, um die aktualisierten Waren-Informationen, die von dem Waren-Informations-Server (14-1) empfangen sind, zu dem wieder beschreibbaren Bereich (16-2) des optischen Datenspeichermediums (16) zu schreiben; und
das Benutzer-Endgerät (12) so eingerichtet ist, um die Waren-Informationen in dem Read-Only-Bereich (16-1) und dem wieder beschreibbaren Bereich (16-2) des optischen Speichermediums (16) für eine Anzeige für einen Benutzer zu kombinieren.

2. Online-Einkaufssystem nach Anspruch 1, wobei nur notwendige Waren-Informationen, die aktualisiert/editiert werden sollen, von dem Waren-Informations-Server (14-1) empfangen werden.

3. Online-Einkaufssystem nach Anspruch 1 oder 2, wobei
das Benutzer-Endgerät (12) so eingerichtet ist, um Benutzer-Informationen, die ein Benutzer Passwort umfassen, zu dem Waren-Informations-Server (14-1) über das Computemetzwerk (10) zu übertragen, wobei der Waren-Informations-Server (14-1) so eingerichtet ist, um die empfangenen Benutzerinformationen zu einer Benutzer Datenbank (14-2) hinzuzufügen, und wobei das Benutzer-Endgerät so eingerichtet ist, um einen verschlüsselten Schlüssel für eine Autorisierung des Benutzer-Passworts zu dem wieder beschreibbaren Bereich (16-2) des Mediums (16) zu schreiben.

4. Online-Einkaufssystem nach einem vorhergehenden Anspruch, wobei der Read-Only-Bereich (16-1) des optischen Datenspeichermediums (16) in einen Bereich, in dem vorgegebene Waren-Informationen über die Herstellungszeit des Mediums (16) geschrieben sind, und einen Bereich, in dem ein verschlüsselter Schlüssel des Verkäufers geschrieben ist, unterteilt ist

5. Online-Einkaufssystem nach Anspruch 1, 2 oder 3, wobei das Benutzer-Endgerät (12) eine Verschlüsselungsvorrichtung (12-4) zum Durchführen einer kryptografischen Datenübertragung mit einem Verschlüsselungs-Server (14-12) unter Verwendung des verschlüsselten Schlüssels des Verkäufers aufweist.

6. Online-Einkaufssystem nach einem vorhergehenden Anspruch, wobei der beschreibbare Bereich (16-2) des optischen Datenspeichermediums (16) in einen Bereich, in dem Aktualisierungsdaten für Waren-Informationen geschrieben sind, einen Bereich, in dem aktualisierte Waren-Informationen geschrieben sind, einen Bereich, in dem Wareneinkaufs-Informationen geschrieben sind, und einen Bereich, in dem private Informationen des Benutzers geschrieben sind, unterteilt ist.

7. Online-Einkaufssystem nach einem vorhergehenden Anspruch, wobei der beschreibbare Bereich (16-2) ein Bereich ist, in dem vorgegebene Informationen wiederholt durch den Waren-Informations-Server (14-1) und den Benutzer geschrieben sind.

8. Verfahren zum Aktualisieren von Waren-Informationen, wobei das Verfahren die Schritte aufweist:
eine Vorrichtung (12), die auf einen Waren-Informations-Server (14-1) über ein Computemetzwerk (10) zugreift;
**gekennzeichnet durch**:
(a) wenn ein optisches Datenspeichermedium (16) an der Vorrichtung (12) installiert ist, Lesen von Waren-Informationen, die in einem Read-Only-Bereich (16-1) des optischen Datenspeichermediums (16) geschrieben sind, und eines letzten Aktualisierungs-Datums des optischen Datenspeichermediums (16) von einem wieder beschreibbaren Bereich (16-2) des optischen Datenspeichermediums (16);
(b) Prüfen, ob dort Waren-Informationen, die in den Waren-Informationen, die auf dem Medium geschrieben sind, aktualisiert werden sollen oder nicht, **durch** Vergleichen eines letzten Aktualisierungs-Datums der Waren-Informationen, die von dem Waren-Informations-Server (14-1) empfangen sind, mit dem letzten Aktualisierungs-Datum, das auf dem wieder beschreibbaren Bereich (16-2) des Mediums (16) geschrieben ist;
(c) wobei, wenn die verglichenen, letzten Aktualisierungs-Datum-Angaben unterschiedlich sind, die Vorrichtung (12) aktualisierte Waren-Informationen von dem Waren-Informations-Server (14-1) über das Computemetzwerk (10) erhält;
(d) wobei die Vorrichtung (12) die übertragenen Waren-Informationen auf den wieder beschreibbaren Bereich (16-2) des Mediums (16) schreibt; und
(e) wobei die Vorrichtung (12) die Waren-Informationen in dem Read-Only-Bereich (16-1) und dem wieder beschreibbaren Bereich (16-2) des optischen Datenspeichermediums (16) für eine Anzeige für einen Benutzer kombiniert.

9. Verfahren nach Anspruch 8, wobei nur notwendige Waren-Informationen, die aktualisiertleditiert werden sollen, von dem Waren-Informations-Server (14-1) zu der Vorrichtung (12) übertragen werden.

10. Verfahren nach Anspruch 8 oder 9, das die Vorrichtung (12) aufweist, unter Verwendung eines verschlüsselten Schlüssels des Verkäufers, der in einem Read-Only-Bereich des Mediums (16) geschrieben ist, um eine kryptografische Datenübertragung mit dem Waren-Informations-Server (14-1) durchzuführen.

11. Verfahren nach Anspruch 8, 9 oder 10, das die Vorrichtung (12) aufweist, die Benutrer-Informationen, einschließlich eines Benutzer-Passworts, zu dem Waren-Informations-Server (14-1) überträgt;
wobei der Waren-Informations-Server (14-1) die empfangenen Benutzerinformationen zu einer Benutzer-Datenbank (14-2) hinzufügt; und
wobei die Vorrichtung (12) einen verschlüsselten Schlüssel für die Autorisierung des Benutzer-Passworts zu dem wieder beschreibbaren Bereich (16-2) des Mediums (16) schreibt

12. Verfahren nach einem der Ansprüche 8 bis 11, wobei, während eines Aufsuchens durch den Benutzer, die Wareninformationen bestimmt so markiert werden, dass ein aktualisierter Bereich und ein nicht aktualisierter Bereich voneinander unterschieden werden.

13. Verfahren nach Anspruch 12, wobei der aktualisierte Bereich und der nicht aktualisierte Bereich mit unterschiedlichen Farben markiert werden.

14. Verfahren nach einem der Ansprüche 8 bis 13, das weiterhin den Schritt (f) eines Aufzeichnens einer Waren-Bestellung des Benutzers basierend auf dem Aufsuchen der Waren-Informationen auf dem Medium aufweist.

## Revendications

1. Système d'achat en ligne, comportant :
un terminal utilisateur (12) conçu pour communiquer avec un serveur d'informations concernant des produits (14-1) sur un réseau informatique (10),
**caractérisé en ce que** :
le terminal utilisateur (12) est conçu pour lire des informations concernant des produits à partir d'une zone de lecture seule (16-1) d'un support de mémorisation de données optique (16) et pour lire une date de dernière mise à jour du support de mémorisation de données optique (16) à partir d'une zone réinscriptible (16-2) du support de mémorisation de données optique (16),
le terminal utilisateur (12) est conçu pour contrôler si oui ou non il existe des informations concernant des produits à mettre à jour en comparant une date de dernière mise à jour d'informations concernant des produits reçues en provenance du serveur d'informations concernant des produits (14-1) à une date de dernière mise à jour écrite sur la zone réinscriptible (16-2) du support (16),
si les dates de mise à jour comparées sont différentes, le terminal utilisateur est conçu pour obtenir des informations concernant des produits mises à jour à partir du serveur d'informations concernant des produits (14-1) via le réseau informatique (10),
le terminal utilisateur (12) est conçu pour écrire les informations concernant les produits mises à jour reçues en provenance du serveur d'informations concernant des produits (14-1) dans la zone réinscriptible (16-2) du support de mémorisation de données optique (16), et
le terminal utilisateur (12) est conçu pour combiner les informations concernant des produits dans la zone de lecture seule (16-1) et la zone réinscriptible (16-2) du support de mémorisation de données optique (16) en vue d'un affichage à un utilisateur.

2. Système d'achat en ligne selon la revendication 1, dans lequel uniquement des informations concernant des produits nécessaires à mettre à jour/éditer sont reçues en provenance du serveur d'informations concernant des produits (14-1).

3. Système d'achat en ligne selon la revendication 1 ou 2, dans lequel :
le terminal utilisateur (12) est conçu pour transmettre des informations d'utilisateur incluant un mot de passe utilisateur au serveur d'informations concernant des produits (14-1) via le réseau informatique (10), le serveur d'informations concernant des produits (14-1) est conçu pour ajouter les informations d'utilisateur reçues à une base de données d'utilisateur (14-2) et le terminal utilisateur est conçu pour écrire une clé cryptée pour l'autorisation du mot de passe utilisateur dans la zone réinscriptible (16-2) du support (16).

4. Système d'achat en ligne selon l'une quelconque des revendications précédentes, dans lequel la zone de lecture seule (16-1) du support de mémorisation de données optique (16) est divisée en une zone dans laquelle des informations concernant des produits prédéterminés de la durée de fabrication du support (16) sont écrites, et en une zone dans laquelle une clé cryptée du vendeur est écrite.

5. Système d'achat en ligne selon la revendication 1, 2 ou 3, dans lequel le terminal utilisateur (12) comporte un dispositif de cryptage (12-4) pour effectuer une communication cryptographique avec un serveur de cryptage (14-12) en utilisant la clé cryptée du vendeur.

6. Système d'achat en ligne selon l'une quelconque des revendications précédentes, dans lequel la zone inscriptible (16-2) du support de mémorisation de données optique (16) est divisée en une zone dans laquelle des données de mise à jour d'informations concernant des produits sont écrites, une zone dans laquelle des informations concernant des produits mises à jour sont écrites, une zone dans laquelle des informations d'achat de produits sont écrites, et une zone pour des informations privées d'utilisateur.

7. Système d'achat en ligne selon l'une quelconque des revendications précédentes, dans lequel la zone inscriptible (16-2) est une zone dans laquelle des informations prédéterminées sont écrites de manière répétée par le serveur d'informations concernant des produits (14-1) et l'utilisateur.

8. Procédé pour mettre à jour des informations concernant des produits, le procédé comportant les étapes consistant en ce que **:**
un dispositif (12) accède à un serveur d'informations concernant des produits (14-1) via un réseau informatique (10),
**caractérisé par** les étapes consistant à :
(a) si un support de mémorisation de données optique (16) est monté sur le dispositif (12), lire des informations concernant des produits écrites dans une zone de lecture seule (16-1) du support de mémorisation de données optique (16) et une date de dernière mise à jour du support de mémorisation de données optique (16) à partir d'une zone réinscriptible (16-2) du support de mémorisation de données optique (16),
(b) contrôler si oui ou non il existe des informations concernant des produits à mettre à jour dans les informations concernant des produits écrites sur le support en comparant une date de dernière mise à jour des informations concernant des produits reçues en provenance du serveur d'informations concernant des produits (14-1) à la date de dernière mise à jour écrite sur la zone réinscriptible (16-2) du support (16),
(c) si les dates de dernière mise à jour comparées sont différentes, le dispositif (12) obtient des informations concernant des produits mis à jour depuis le serveur d'informations concernant des produits (14-1) via le réseau informatique (10),
(d) le dispositif (12) écrivant les informations concernant des produits transmises sur la zone réinscriptible (16-2) du support (16), et
(e) le dispositif (12) combinant les informations concernant des produits dans la zone de lecture seule (16-1) et la zone réinscriptible (16-2) du support de mémorisation de données optique (16) en vue d'un affichage à un utilisateur.

9. Procédé selon la revendication 8, dans lequel uniquement des informations concernant des produits nécessaires à mettre à jour/éditer sont transmises du serveur d'informations concernant des produits (14-1) au dispositif (12).

10. Procédé selon la revendication 8 ou 9, comportant le dispositif (12) utilisant une clé cryptée du vendeur écrite dans une zone de lecture seule du support (16) pour effectuer une communication cryptographique avec le serveur d'informations concernant des produits (14-1).

11. Procédé selon la revendication 8, 9 ou 10, comportant un dispositif (12) transmettant des informations d'utilisateur incluant un mot de passe utilisateur au serveur d'informations concernant des produits (14-1),
le serveur d'informations concernant des produits (14-1) ajoutant les informations d'utilisateur reçues à une base de données d'utilisateur (14-2), et
le dispositif (12) écrivant une clé cryptée pour l'autorisation du mot de passe utilisateur dans la zone réinscriptible (16-2) du support (16).

12. Procédé selon l'une quelconque des revendications 8 à 11, dans lequel pendant la récupération de l'utilisateur, les informations concernant des produits sont marquées de manière distincte de sorte qu'une partie mise à jour et une partie non-mise à jour se distinguent l'une de l'autre.

13. Procédé selon la revendication 12, dans lequel la partie mise à jour et la partie non-mise à jour sont marquées à l'aide de couleurs différentes.

14. Procédé selon l'une quelconque des revendications 8 à 13, comportant en outre l'étape consistant à (f) enregistrer un bon de commande de l'utilisateur basé sur la récupération des informations concernant des produits sur le support.
